# EUROPEAN PATENT APPLICATION

(11) **EP 2 536 074 A1**
(43) Date of publication of application: **19.12.2012**
(21) Application number: 11742069.5
(22) Date of filing: 14.01.2011
(51) Int. Cl.: H04L 12/56, G06F 9/50, G06F 13/00

(54) **INFORMATION PROCESSING DEVICE, AND METHOD OF PROCESSING INFORMATION UPON INFORMATION PROCESSING DEVICE**

(30) Priority: 12.02.2010 JP 2010028394
(71) Applicant: Hitachi, Ltd., Chiyoda-ku Tokyo 100-8280 (JP)
(72) Inventor: SHIKANO, Hiroaki c/o Hitachi, Ltd.,, Chiyoda-ku Tokyo 100-8220 (JP)
(74) Representative: Strehl Schübel-Hopf & Partner
(86) International application number: PCT/JP2011/050559
(87) International publication number: WO 2011/099320

(57) **Abstract**

In nodes (141-142) disposed between terminal devices (105-110) and a processing server (101), in response to the problem in which a central portion of a network gets congested when data from a variety of apparatuses, such as sensors or control devices, is passed as is over the network, determinations are made as to whether the nodes will process packets being sent from the terminal devices to the processing server. If it is determined that the nodes will process the packets, it will be possible for the nodes to minimize load on the central portion of the network by carrying out the processing in place of the processing server.

## Description

### Technical Field

The present invention relates to a network-distributed processing device and packet data processing method that dispose multiple nodes capable of processing packet data, on a local area network (LAN) located at an end of a network and that reduce the load imposed on the network and improve response performance by performing processes instead of a server.

### Background Art

Networks have become rapidly widespread and have become an infrastructure which is indispensable for our life. The rate of diffusion of optical lines to households has exceeded 20% at a national average, and various services using lines in a wide band of 100 Mbps have started to be provided. For example, conversion of media infrastructures into IP (internet protocol), such as IP phones and IP re-transmission of terrestrial digital broadcasting is steadily proceeding. Accumulation of knowledge information in networks is also proceeding. In cloud computing, information accumulated in a user's information terminal is accumulated in a data center on a network, and the user can extract the information via the network anywhere at any time. It can be expected that not only information terminals but also devices having a computer system embedded therein (embedding devices), including home appliances such as televisions, air-conditioners, and refrigerators, security cameras, and sensors such as temperature sensors and moisture sensors, will be connected to networks and thus real-time information such as information on ambient environment will be accumulated in cloud in the future.

As seen, the importance of networks is being further increased. Demands to ensure the connectivity, reliability, and quality of service (QoS) thereof are being further increased accordingly. Under this trend, a next-generation network (NGN) is being constructed, aiming to provide a high degree of service such as the QoS assurance of phone calls or video distribution and the security assurance of communications.

Devices that have participated in networks so far are mainly information terminals such as servers and personal computers (PCs). Accordingly, information distributed over networks has been mainly information that occurs when humans actively use these information terminals. Currently, due to cloud, such information that is dispersed at information terminals is being aggregated on networks and being used as a huge knowledge database (DB). However, there is a problem that such information does not reflect the real-time situation of the real world. For example, consider large commercial facilities. In recent years, websites for introducing these facilities or goods handled by the facilities have been established on the Internet and used as means for attracting customers. While these websites can be used to check, for example, what kind of shops each facility includes or what kind of selection of goods each shop has, the websites cannot provide, for example, information on how congested each shop is currently or information on the detailed inventory of each shop. It is expected that in the future, a great number of sensors for obtaining information in real time will be connected to networks, and information will be gathered in cloud, thereby providing real-time information.

It is also expected that terminal devices will have greater functionality and higher performance. For example, it is expected that robots will appear in our life space in the future as devices for responding to humans in the real world. Specifically, it is expected that as embedding devices have greater functionality and higher performance, embedding devices present at the interface with the real world will be actively connected to networks, and information held by cloud computing providers will be fed back to humans. When embedding devices are connected to networks in this way, control information, which is information different in quality (responsiveness, data unit, distribution frequency, or the like) from traditional knowledge information, is distributed over the networks. As a result, information having a large data amount, such as sensor information, is frequently distributed over the networks. Accordingly, there is a concern that the traffic may increase, increasing the network communication time (communication latency). Further, since the server intensively performs processing, it is concerned that imposition of a heavier load on the server may lead to an increase in processing time.

Examples of an idea for reducing the amount of data being distributed include a technology that disperses data access and reduces the load imposed on the entire network by disposing information on a network in a divided manner. For example, Patent Literature 1, in a system where a higher-level server and lower-level servers are connected together via a network, divides information generated by the higher-level server into pieces of partial information and stores the pieces of partial information in the lower-level servers. When a lower-level server receives a request from a user terminal, it transmits data corresponding to the request to the user terminal if it holds the data; it transmits a data transmission request to the higher-level server if it does not hold the data. As a result, if the lower-level server holds the data, response to the user is improved.

### Citation List

### Patent Literature

Patent Literature 1: Japanese Unexamined Patent Application Publication No. Hei8-166916

### Summary of Invention

### Technical Problem

In the invention described in Patent Literature 1, the lower-level server receives data from the higher-level server and holds it. Thus, transmission of the data from the higher-level server to the lower-level server can be omitted thereafter.

However, it is not considered in the invention described in Patent Literature 1 that the higher-level server gathers data from a user terminal and processes it. Even when the invention described in Patent Literature 1 is applied to a system that performs processing as described above, the lower-level server eventually must transfer all packets received from a user terminal to the higher-level server. As a result, problems described below occur.

First, in a system where conventional information terminals, as well as various embedding devices such as home appliances having a computer system embedded therein and sensors are connected to a network, an increase in network traffic becomes a larger problem. This is because sensor information such as images, sound, temperature, and moisture is large in amount. Further, if sensor information is obtained 24 hours, 365 days and distributed over a network as it is, network resources would be used constantly. If the lower-level server receives packets including such a large capacity of information and transmits them to the higher-level server without performing any process on the packets, problems such as degradation of the communication speed and the response time and increases in the power consumption of the network devices would occur. Further, the load imposed on the server that receives the sensor information would be increased.

Further, an embedding device cannot include a high-functionality information processing system owing to cost, size, and power constraints. To achieve higher functionality, the embedding device needs to be associated with an external server device via the network. However, the device is required to rapidly respond to an input from the user or a variation in environment detected by a sensor. For this reason, if the lower-level server achieves the above-mentioned high functionality by accessing the higher-level server, which is remotely disposed via the network, without processing packets, responsiveness would be degraded due to communication delay time taken by a network communication. For example, a physical distribution robot for carrying baggage is used as an example. The robot has the function of avoiding an obstacle during a move by receiving information from an image sensor disposed in space via a network and using the information and the function of carrying multiple pieces of baggage in cooperation with another robot by communicating with the other robot via the network. In this case, the information from the image sensor is processed by a server disposed on the network once, and the processing result is transmitted to the robot. Thus, multiple pieces of image sensor information are concentrated on the center of the network and the server, increasing the load imposed on the center of the network. As a result, there occurs a problem that the time taken to perform a communication over the network (communication delay time) increases the response delay time staring with an input from a sensor, through processing performed by the server, and ending with device control based on the processing result.

It can be considered to distribute image sensor information directly to the robot and cause the robot itself to process the information. In this case, the robot requires a wide-band, wireless network or high-performance information processing device. As a result, there occur problems such as upsizing of the casing of the robot and a reduction in operating time resulting from an increase in power consumption.

As seen, if the lower-level server has only the function of holding data received from the higher-level server and distributing it, the following problems occur in accordance with the device that the lower-level server causes to process packets: a first problem that if various devices such as sensors and embedding devices are connected to the network and if the lower-level server causes the external higher-level server to process information via the network, a load is imposed on the center of the network, including the higher-level server, or the network communication delay time occurs; and a second problem that if an embedding device itself directly processes information, the casing of the embedding device is upsized or power consumption is increased.

### Solution to Problem

A typical aspect of the invention disclosed in this application in order to solve the above-mentioned problems will be outlined below.

A first aspect of the present invention provides a method for processing information upon an information processing device, the information processing device being disposed between a terminal device and a processing server, the processing server being configured to process a plurality of packets transmitted by the terminal device, the information processing device being configured to intervene in transfer of the packets from the terminal device to the processing server. The method is characterized in that the method comprises: a first step of receiving a first packet; a second step of, after the first step, determining whether the information processing device should process the first packet, on the basis of header information of the first packet; a third step of, if it is determined in the second step that the information processing device should process the first packet, performing a first process on a payload of the first packet; and a fourth step of, if it is determined in the second step that the information processing device should not process the first packet, transmitting the first packet to the processing server. A second aspect of the present invention provides an information processing device disposed on a network connecting a router and a processing server and configured to process multiple packets transmitted to the processing server by a terminal device via the router and the network. The information processing device is characterized in that it holds a first table for, when the information processing device receives a first packet, determining whether the information processing device should perform a first process on the first packet and a second table for defining the first process.

A third aspect of the present invention provides an information processing device disposed between a terminal device and a processing server, the processing server being configured to process a plurality of packets transmitted by the terminal device, the information processing device being configured to intervene in transfer of the packets from the terminal device to the processing server. The information processing device is characterized in that it comprises: a plurality of ports for transmitting or receiving the packets; a first determination unit that, when one of the ports receives a first packet included in the packets, determines whether the information processing device should process the first packet, on the basis of a header of the first packet and, when determining that the information processing device should not process the first packet, transfers the first packet to the processing server; and a first processing unit that, when the determination unit determines that the information processing device should process the first packet, performs a first process on a payload of the first packet.

### Advantageous Effects of Invention

According to the present invention, it is possible to reduce a delay in the response of an embedding device while reducing the load imposed on the center of the network. It is also possible to prevent upsizing of the casing of the embedding device or an increase in power consumption.

### Brief Description of Drawings

[FIG. 1] A diagram showing an example configuration of a network to which distributed processing nodes are applied
[FIG. 2] A diagram showing a basic flow of a process performed by a distributed processing node instead of a server
[FIG. 3] A diagram showing an example hardware configuration of the distributed processing node
[FIG. 4] A diagram showing an example hardware configuration of the distributed processing node
[FIG. 5] A diagram showing a configuration of a processing processor of the distributed processing node
[FIG. 6] A diagram showing a configuration of a packet processing processor
[FIG 7] A diagram showing an example configuration of a service table on the distributed processing node
[FIG. 8] A diagram showing an example configuration of a service definition table on the distributed processing node
[FIG. 9] A diagram showing an example configuration of a service process management table on the distributed processing node
[FIG. 10] A diagram showing an example configuration of a distributed node management table on a management server
[FIG. 11] A diagram showing an example configuration of a service management master table on the management server
[FIG. 12] A diagram showing a detailed flow of a process performed by the distributed processing node instead of the server
[FIG. 13] A flow of distribution of service table information and a process program performed instead of the processing server by the management server
[FIG. 14] A diagram showing a flow of reception of service table information and a process program performed instead of the processing server by the distributed processing node

### Description of Embodiments

### <Example Configuration of Network to Which Present Invention Is Applied>

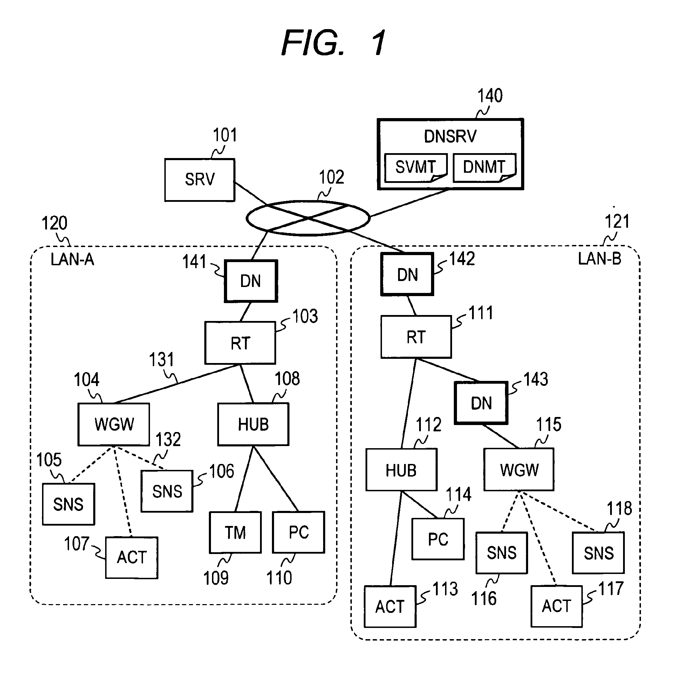

Hereafter, detailed description will be made using an embodiment of the present invention. FIG. 1 shows an example configuration of a network where servers and devices are connected together and to which the present invention is applied. Connected to ends of the network are information terminals (TM) 109 and 114, such as an IP telephone or network television, computers (PC) 110 and 114, sensors (SNS) 105, 106, 116, and 118, such as a camera, microphone, temperature senor, moisture sensor, or human sensor, and control devices (ACT) 107, 113, and 117, such as a lighting system or automatic door. These devices can be defined as devices directly used by users, that is, user devices. These devices are connected to a center 102 of the network via a hub (HUB) 108 and routers (RT) 103 and 111. Connected to the center 102 of the network is a server 101. These devices are connected to the network by wire 131 or wirelessly 132. For example, if the devices are connected together wirelessly, they are connected together via a wireless gateway WGW 104 for performing media conversion to a wired network. In this example, the sensors SNS 105, SNS 106, SNS 116, and SNS 118 and the control devices ACT 107 and ACT 117 are connected to the network wirelessly. The network is formed in the shape of a tree where the center is branched into ends from an upstream toward a downstream. It is divided into areas in accordance with geographical or positional conditions, such as rooms or buildings, and logical conditions, such as sections, users, and the authority over connected terminal devices. For example, in this example, the network is divided into two areas: LAN-A120 and LAN-B121.

Disposed on the network having the terminal devices (SNS or ACT) and the processing server (SRV) connected together thereon as described above are distributed processing nodes (DN) 141, 142, and 143. Each distributed processing node performs some of processes performed by a predetermined server on multiple packets that are transmitted to the processing server by a terminal device (SNS or ACT) via the routers or the network. Details of the distributed processing nodes will be described later. Further, a management server (DNSRV) 140 for managing the distributed processing nodes DN is disposed at the center of the network. The DNSRV holds a service management table (SVMT) for managing processes performed by each DN and a distributed node management table (DNMT) for managing the operating state of each DN. Details of the tables (SVMT, DNMT) held by the DNSRV will be described later.

### <Network without Distributed Processing Nodes According to Present Invention>

First, a network without the distributed processing nodes 141 and 142 is considered. In this case, all the terminal devices access the server 101 via the center 102 of the network. Accordingly, communication packets from the respective devices in the LAN-A and LAN-B pass through the center 102 of the network. As a result, the center 102 of the network becomes congested with communication traffic from the devices. For example, assume that the SNS 105 is an image sensor and the ACT 107 is an automatic door and consider an application where a human is sensed by the image sensor and authenticated by facial recognition and then the automatic door is opened. On a traditional network, the SNS 105 transmits a captured image directly to the SRV 101 over the network. The SRV 101 receives the image transmitted by the SNS 105 on a frame-by-frame basis and performs a face detection process. If a face is extracted as a result of the face detection, the SRV 101 performs a process of comparing the extracted face with a previously registered face database. If a registered face and the detected face are matched as a result of the comparison process, the SRV 101 transmits a command to open the door, to the ACT 107. As seen, even when the SNS 105 does not capture the face of a human, it always transmits an image to the center 102 of the network via the wireless gateway WGW 104 and the router 103. Thus, the load imposed on the network is increased. As a result, for example, when the network television TM 109 receives an image from the server by streaming, a sufficient band may not be secured and the degradation of image quality, such as a reduction in resolution or frame rate, may occur. Further, since the load imposed on the network is increased, a communication delay may occur on the network. As a result, the response time from the recognition of the user until the open or close of the automatic door may be prolonged.

As seen, the traditional network has a problem that the load imposed on the center of the network is increased.

### <First Example where Distributed Processing Nodes are Applied to Network>

A first example where the distributed processing nodes (DN) disclosed in the present invention are applied will be described. This example is an example where the DN 141 is disposed at a level higher than the router connected to the center of the network in the LAN-A. As in the example where the traditional network is used, assume that the SNS 105 is an image sensor and the control device (ACT) 107 is an automatic door. While the image sensor transmits an image output to the server SRV 101, a setting is made such that the distributed processing node (DN) 141 performs a face extraction process of processes performed by the SRV 101 instead of the SRV 101. The DN 141 analyzes header information of a packet passing through the DN to extract the IP address and port number of the source, the SNS 105, and the IP address and port number of the destination, the SRV 101. The SRV 101 previously makes a setting such that the DN 141 detects an image data-containing packet transmitted from the SNS 105 to the SRV 101. When the DN 141 detects such a packet, it performs the predetermined process (face extraction process) on the packet instead of the SRV 101. The DN 141 transmits the result of the face extraction process, that is, the presence or absence of a face and, if a face is detected, the face image data to the SRV 101 in accordance with the setting made by the SRV 101. The SRV 101 performs a face recognition process only when a face is detected and it receives the face image, and then performs a process of comparing the face image with the previously registered face database. If a registered face and the detected face are matched as a result of the comparison process, the SRV 101 transmits a command to open the door, to the ACT 107. As a result, the image data from the SNS 105 can be prevented from passing through the center 102 of the network, reducing traffic. Further, since the SRV 101 causes the DN 141 to perform a face extraction process instead of itself, it is possible to reduce the load imposed on the server and to reduce the response time of the server.

### <Second Example where Distributed Processing Nodes are Applied to Network>

An application where a machine abnormality is monitored in a factory is used as a second example where the distributed processing nodes (DN) of FIG. 1 are applied. For example, assume that the sensor SNS 116 is a temperature sensor and the sensor SNS 118 is an image sensor. Also assume that the control device ACT 117 is a material processing device and that the PC 114 is a monitoring terminal device and, when a machine abnormality is found by the temperature sensor, displays the machine abnormality information and image information on itself. In a traditional network, temperature data of the SNS 116 and image data of the SNS 118 are transmitted to the server SRV 101; the server always performs monitoring; and abnormality information is transmitted to the PC 114 under prescribed conditions such as a temperature abnormality. On the other hand, assume that a distributed processing node (DN) is interposed between the wireless gateway WGW 115 and the router RT 111 (DN 143) and that the SRV 101 previously makes a setting such that the distributed processing node (DN) detects a packet transmitted from the temperature sensor SNS 116 and the image sensor SNS 118 to the SRV 101 and performs a temperature monitoring process and an image distribution process instead of the SRV 101. When the DN 143 detects the packet, it starts a temperature monitoring process and checks if an abnormality is occurring in temperature. Further, the DN 143 updates the image data while holding it for a given time period. When the DN 143 detects that an abnormal temperature is found in the data of the SNS 116, it transmits the abnormality information directly to the PC 114. At the same time, it transmits the image data held by itself directly to the PC 114. As a result, the temperature data and the image data are prevented from passing through a level higher than the router RT 111 of the LAN-B121, reducing the load imposed on the network. Further, a direct response is made to the abnormality detection and notification thereof in the local network LAN-B121 without passing through the center 102 of the network. As a result, the communication path on the network is reduced, which can reduce the response time.

### <Basis Flow of Process Performed by Distributed Processing Node Instead of Server>

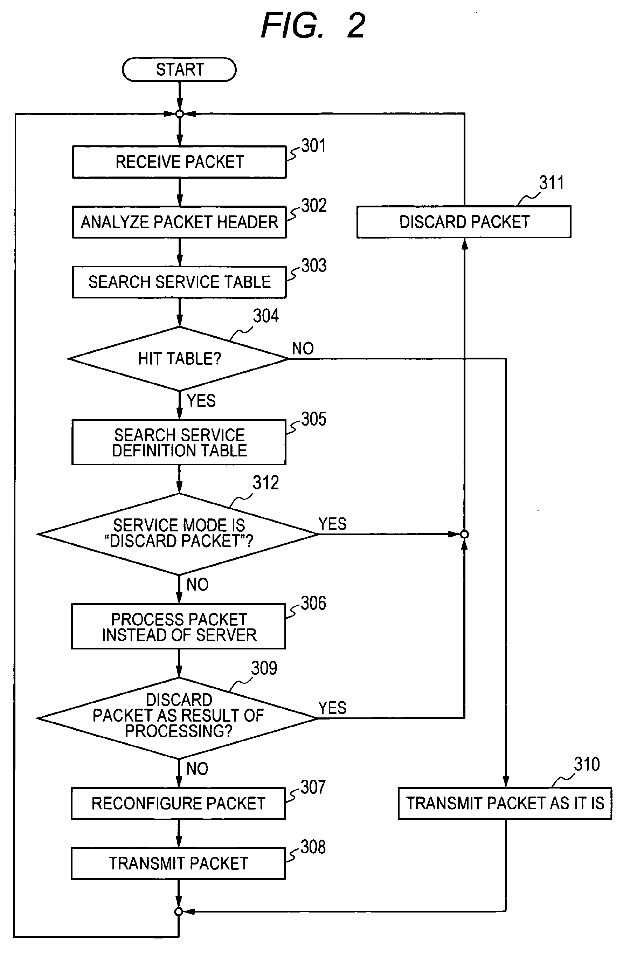

Next, a flow of a process performed by the distributed processing node DN instead of the server will be described. The flow is shown in FIG. 2. The DN receives all packets on the network to which the DN is connected (301). To identify a packet to be processed, the DN first analyzes and extracts header information added to each packet (302). Specifically, the DN extracts the source IP (SIP), the source port number (SPORT), the destination IP (DIP), and the destination port (DPORT) of each packet. Then, the DN searches a "service table (SVT)" that defines a packet to be subjected to a process by the DN instead of the server and details of the process (303). It then checks if there is an entry matching the extracted header information (304). If there is no matching entry, the packet is a packet not to be processed by the processing node DN. Accordingly, the DN again transmits the packet to the network without processing it as it is (310). If there is a matching entry, the packet is a packet to be processed by the distributed processing node DN. Accordingly, the DN searches the "service definition table (SVDT)" for what type of process to be performed on the packet (305). If the service definition table SVDT shows "abandon packet" as service mode for the packet, the DN abandons the packet and returns to reception mode (311). If "process" is shown as service mode for the packet, the DN extracts target data from the packet and processes the data instead of the server on the basis of table information (306). After processing the data instead of the server, the DN determines whether the processed packet needs to be transmitted, on the basis of a parameter outputted in the processing (309). If the packet can be abandoned, the DN returns to reception mode (311). Where the DN transmits the packet processed by itself instead of the server, it reconfigures the processed packet into a packet to be transmitted to a destination defined in the table information (307) and transmits the reconfigured packet to the network again (308). After the transmission, the DN returns to packet reception mode.

As seen, the method for processing information upon the distributed processing node is characterized that when receiving a packet, the step of determining whether the packet should be processed by the distributed processing node (304) is performed; and if the packet is a packet to be processed by the distributed processing node, the steps of performing a predetermined process on the payload of the packet (306, 311) are further performed. The processes performed by the distributed processing node include abandoning the packet (311) . Such characteristics allow some of packets transmitted by a terminal device to be processed without having to transmit them to the processing server. As a result, the problem of imposing a load on the center of the network, which has been a problem for traditional networks, is solved. This method is also characterized that if the packet is a packet not to be processed by the distributed processing node, the packet is transmitted to the router without performing a special process on it (310). The method is also characterized that even if the distributed processing node processes the packet, the above-mentioned predetermined process is not all of processes that can be performed by the processing server but part thereof. Owing to such characteristics, the distributed processing node is only required to perform part of the processes performed by the processing server and can be realized using a cheaper processor or the like. This is advantageous in terms of cost.

Whether the packet should be processed by the distributed processing node is determined based on a comparison between the header of the packet and the service table. This is because the header contains information on the source, destination, or the like of the packet and thus the determination is made in a simplest manner.

After performing the predetermined process, the step of determining whether the processed packet can be abandoned is performed (309). If it is determined that the packet can be abandoned, the packet is actually abandoned (311). Owing to this process, the distributed processing node can transmit only a packet that indeed needs to be transmitted, to the router. Thus, the response time from the distributed processing node can be further reduced. In particular, the distributed processing node can be favorably operated at high speed in examples where most of data can be abandoned, such as the above-mentioned application where an abnormality in an automatic door or factory machine is monitored. Whether the packet can be abandoned is determined based on a definition in the service definition table or a parameter outputted in the process. If it is not desired to pass a predetermined packet through the center of the network for security reasons or the like or if it is determined in the predetermined process, for example, that the data does not meet a specific condition, the packet is not passed through the center of the network and thus the load imposed on the network is reduced.

If it is determined in step (309) that the packet cannot be abandoned, the process of changing the destination of the packet is performed (307), and the packet is actually transmitted (308). Owing to this characteristic, the packet can be completely processed without through the processing server. As a result, the load imposed on the center of the network can be reduced.

To realize the above-mentioned flow, the distributed processing node according to the present invention includes determination units for realizing the steps (304, 306, 312), processing units for realizing the steps (306, 307, 308, 310, 311), and storage units for storing the service table SVT and the service definition table SVDT. The determination units and the processing units are composed of processors PRC (404, 506) to be discussed later, or the like. The storage units are composed of memories (403, 404) or the like.

### <Configuration of Distributed Processing Node>

A distributed processing node DN is added to any one of ends of a network and used. For this reason, the DN includes two network ports and a processor for processing information, as basic hardware components thereof. Since the DN is disposed at an end of the network, it is expected to be small, low-power, and low-cost. While the DN performs a process instead of the server, it does not perform all processes performed by the server. While the DN has a lower processing capability than the server, it is considered to use an embedded processor as the DN so that the DN is small, low-power, and low-cost. Since the DN processes packets in parallel and performs multiple processes in parallel instead of the server, it is preferably composed of a multi-core processor including multiple processor cores. Since a multi-core processor operates multiple processor cores in parallel at a low clock frequency and at a low operating voltage, high power performance (high performance, low power) is obtained. If the multi-core processor is a dedicated processor (accelerator) that performs a particular process efficiently and has a heterogeneous configuration, power performance can be further increased.

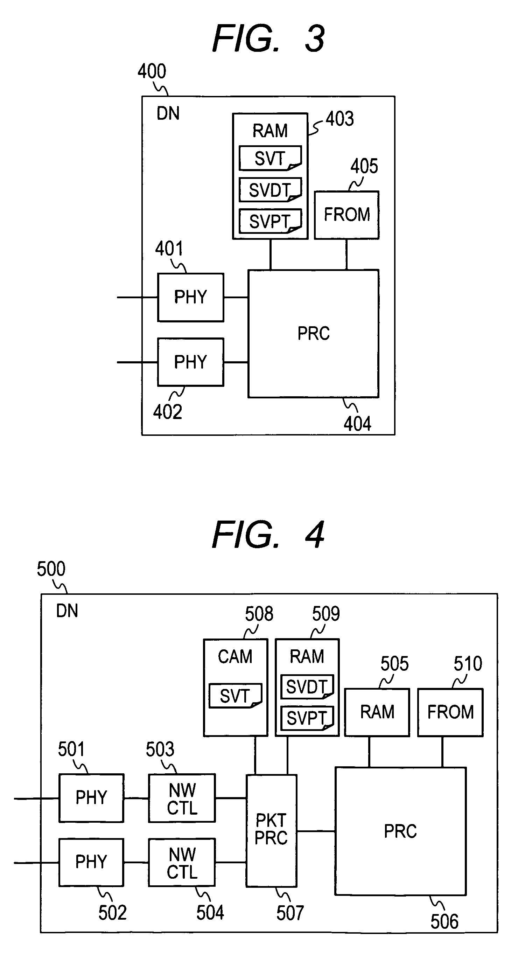

FIG. 3 shows a configuration of the distributed processing node DN. A DN 400 includes the following components: first, physical layer chips (PHY) 401 and 402 that are connected to the network (LAN) and configured to receive physical electrical signals and convert them into logical signals specified by a standard; next, a processor (PRC) 404 that performs a protocol process of receiving or transmitting packets (a process of extracting packet data in accordance with a protocol such as TCP/IP), a packet analysis process of analyzing the header of a packet and determining the attributes and processing of the packet in accordance with the processing flow of FIG. 2, and processes performed instead of the server; further, a memory (RAM) 403 for temporarily storing programs and data; and a non-volatile memory (FROM) 405 for holding a boot program. The RAM 403 holds the service table SVT and the service definition table SVDT for performing the various searches shown in FIG. 2, as well as the service process definition table SVPT that defines a process number for starting a process as a result of a search of the service definition table. Details of the SVPT will be described later. While FIG. 3 shows a configuration where the PRC includes a network controller (NWCTL) for performing a protocol process for transmitting or receiving a packet and a packet analysis processing unit (PKTPRC) for analyzing the header of a packet and determining the attributes and processing of the packet in accordance with the processing flow of FIG. 2 in the form of one chip, the DN may include these components as separate ones. FIG. 4 shows a configuration diagram where the DN includes the network controller (NWCTL) and the packet analysis processing unit (PKTPRC) as separate components. Attached to the packet analysis processing unit is a memory RAM 509 that stores a CAM (content addressable memory) 508 for storing the service table SVT and rapidly searching for a table entry and the service definition table SVDT, and the service process definition table SVPT. The PKTPRC is hardware for performing the packet header analysis (302) and the service table search (303) in the flow shown in FIG. 2. The PKTPRC holds a service table to be discussed later and, when receiving a packet, compares the header of the packet with the service table. When the packet does not match any entries of the service table, the PKTPRC transmits the packet again as it is; when the packet matches an entry, the PKTPRC temporarily holds the packet and transfers only the data thereof to a processing processor PRC 506. The PRC connects with a memory RAM 505 for temporarily storing programs and data and a non-volatile memory (FROM) 510 for storing a boot program. By forming the PKTPRC as hardware separate from the processor as described above, the determination as to whether the distributed processing node receives a packet, shown in the above-mentioned step 304 of FIG. 2, can made rapidly.

### <Configuration of Processing Processor of Distributed Processing Node>

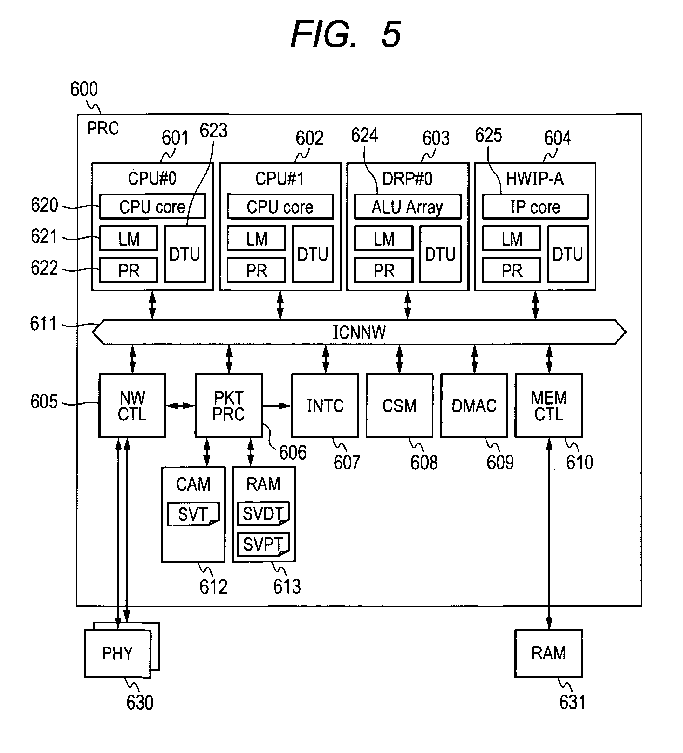

Next, the configuration of the processing processor (PRC) 404 shown in FIG. 3 will be described. FIG. 5 shows an example configuration of the processor PRC. The PRC includes processor blocks 601, 602, 603, and 604 for processing information, a network controller (NWCTL) 605 for performing a protocol process for transmitting or receiving a packet, a packet analysis processing unit (PKTPRC) 606 for analyzing the header of a packet and determining the attributes and processing of the packet in accordance with the processing flow of FIG. 2, an interrupt controller (INTC) 607 for controlling an interrupt to the processor, an on-chip shared memory CSM for temporarily storing data, a data transfer mechanism (DMAC) 609 for autonomously transferring data between memories with efficiency, and a memory controller (MEMTCL) 610 for accessing a large-capacity, external memory. These blocks are connected together via an in-chip shared network ICNNW (611). Connected to the PKTPRC is a CAM (612) holding the service table SVT, a RAM (613) holding the service definition table SVDT and the service process definition table SVPT. While FIG. 5 shows a configuration where the CAM 612 and the RAM 613 are included in the same chip, they may be layered on the chip as multi-chip modules (MCM) or connected to outside of the chip as separate components.

Multiple types of processors for processing information are included in accordance with function and performance requirements. In the example configuration of FIG. 5, the processing processor PRC includes two general-purpose processors (CPU) (601, 602), one dynamically reconfigurable processor (DRP) (603) that can dynamically change the configuration of hardware and perform a process efficiently, and one hardware processing engine (HWIP) (604) for exclusively performing only a particular process. The CPUs perform a management process. In the management process, the CPUs control the entire DN, update the tables SVDT and SVPT on the service tables SVT and RAM 613 on the CAM 612 connected to the PKTPRC, and receive table information and a program executed instead of the processing server SRV 101 from the management server DNSRV 140. Each processor core includes a high-speed local memory LM 621 and can increase processing performance by loading frequently accessed data into the LM. Similarly, each processor core includes a data transfer unit DTU 623 for transferring data from an external memory RAM 631 or shared memory CSM 608. Each processor core also includes a power control register PR 622 for setting the clock frequency or power supply voltage of each core.

### <Configuration of Packet Analysis Processing Unit>

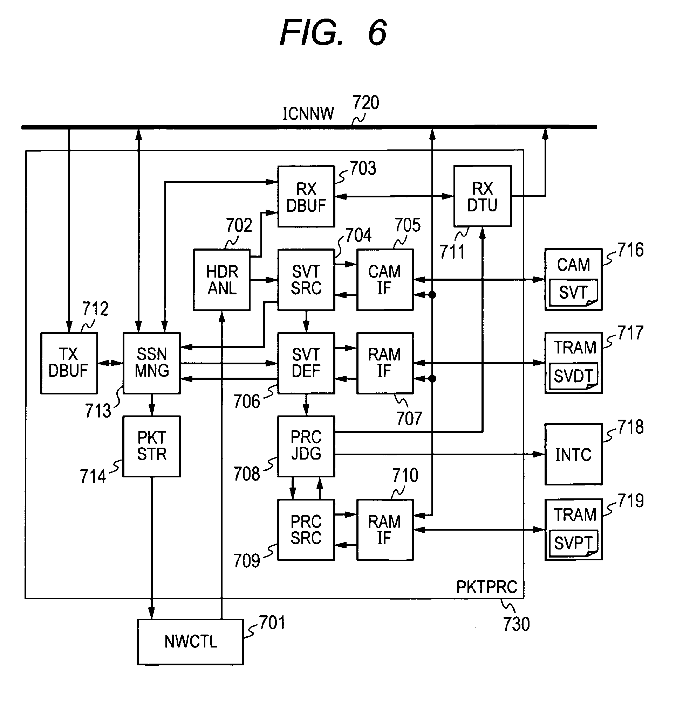

Next, packet analysis processing units PKTPRC 507 and 606 will be described using FIG. 6. As described, the PKTPRC has the function of analyzing and extracting the header of a packet, searching for an entry of the preset service table, and comparing the header with an entry. While this process may be performed by the general-purpose processors 601 and 602, performing this process in a Gbps-support LAN requires high performance. For this reason, it is essential to increase the speed by means of conversion into hardware. A PKTPRC can be divided into two blocks: a block that mainly transmits or receives a packet and analyzes the header thereof; and a block that searches a service table and determines details of processing of the packet.

First, the configuration of the block that transmits or receives a packet and analyzes the header thereof will be described. This block includes a packet analysis block (HDRANL) 702 for analyzing the header of a packet and extracting the source IP address, the source port, the destination IP address, and the destination port of the packet, a reception data buffer (RXDBUF) 703 for temporarily holding a reception packet, a session management manager (SSNMNG) 713 for managing a session corresponding to a protocol such as TCP/IP, and a transmission data buffer (TXDBUF) 712 for temporarily holding a transmission packet. The SSNMNG holds a session state corresponding to a received packet and is managed by a management process performed by a processor.

For a packet received via the network controller NWCTL, the header thereof is first analyzed by the HDRANL 702, and the main body thereof is temporarily held by the RXDBUF 703. The extracted header information is transmitted to the service block search block (SVTSRC) 704. The SVTSRC searches the service table. If the service table does not contain an entry matching the header information, the SVTSRC instructs the SSNMNG 713 to transfer the packet. The SSNMNG reads the packet temporarily held by the RXDBUF 703 and transfers the packet to the PKTSTR 714. As a result, the packet is transmitted to the network via the NWCTL 701 as it is without being processed by the DN. If the service table contains an entry matching the header information, the packet is processed by a processor of the DN. As a result, if the processing result is transmitted, the result is transferred to the TXDBUF 712 and reconfigured into a packet by the PTKSTR 714 via the SSNMNG 713 on the basis of an instruction transmitted by the processor via the NWCTL 701. If the processing result is not transmitted (that is, if the packet is abandoned), the packet is abandoned by the SSNMNG 713, which has received the instruction from the processing processor.

Next, the configuration of the block that searches a service table and determines details of processing of a packet will be described. The block includes a service table search block (STVSRC) for searching a service table and determining whether header information of the packet matches the table, a service definition table reference block (SVTDEF) for referring to the table defining details of processing if the header information matches the service table, a service process management table reference block (PRCSRC) for searching for an interrupt to a processor that performs processing, a process determination block (PRCJDG)708 for determining details of processing and determining which processor core should perform processing, and a data transfer block (RXDTU) 711 for transferring packet data to the shared memory CSM 608, the external memory RAM 631, and the local memory LM 621 included in each processor core. Connected to the STVSRC 704 is an IF (CAMIF) 705 for connecting with the CAM 716 that holds the service table SVT and searches the table at high speed. Connected to the SVTDEF 706 is an IF (RAMIF) 707 for connecting with a memory TRAM 717 holding the service definition table SVDT. Connected to the PRCSRC 709 is an IF (RAMIF) 710 for connecting with a memory TRAM 719 holding the service process management table SVPT. Each IF block is connected to the shared bus ICNNW 720 so that each table can be updated in the management process performed by the CPU.

The SVTSRC 704 searches the service table for an entry matching the header information extracted by the HDRANL. If the service table contains a matching entry, the SVTSRC 704 transmits a service ID corresponding to the entry to the SVTDEF 706, which then refers to the service definition table defining details of processing. The SVTDEF first identifies a service mode for determining an operation, on the basis of the result of the reference. There are three service modes: "Pass" in which the packet is transmitted to a higher level as it is without being processed; "Abandon" in which the packet is abandoned by the DN; and "process" which indicates that information will be processed by the DN. If the service mode is "Pass, " the SVTDEF instructs the SSNMNG 713 to read the packet from the RXDBUF 703 and transfer it to a higher level. If the service mode is "Abandon," the SVTDEF instructs the SSNMNG 713 to delete the entry of the packet held by the RXDBUF and abandon the packet. If the service mode is "Process," the SVTDEF transmits a service process ID in the service definition table referred to in order to start a corresponding process, to the PRCJDG 708. The PRCJDG inquires a service process ID of the PRCSRC, refers to the service process management table defining a processor core which should perform a process, and determines an execution processor core. The PRCJDG transfers the packet data to one of the CSM 608, the RAM 631, the LM 621 via the RXDTU 711. The PRCJDG also starts a process by specifying an interrupt destination processor core to an interrupt controller INTC 718 and making an interrupt.

### <Configuration of Service Table>

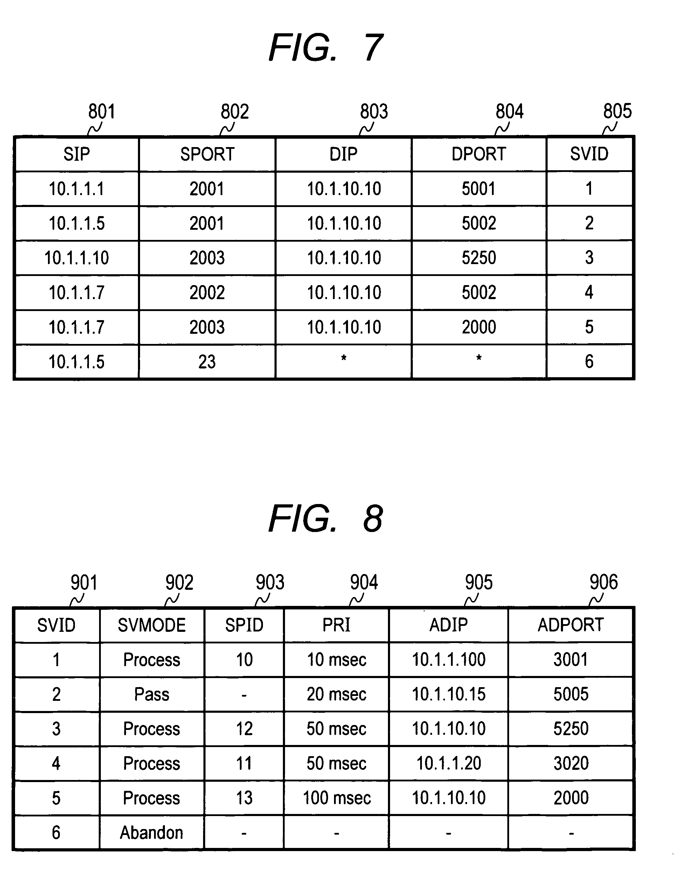

Next, the configuration of the service table (SVT) defining conditions for determining whether the distributed processing node DC should process a received packet instead of the server will be described. FIG. 7 shows an example configuration of the service table. In this example, TCP/IP or UDP is used as a communication protocol. The service table contains source IP addresses (SIP), source port numbers (SPORT), destination IP addresses (DIP), destination port numbers (DPORT), and service IDs corresponding to combinations thereof. The SIP, SPORT, DIP, and DPORT are used as search keys, and the SVID is outputted as a search result. The SIP identifies the source device, and the SPORT represents the type of data of the source or a corresponding service. The DIP identifies the destination server (or device), and the DPORT represents the type of a service provided by the destination server (or device). That is, by defining these combinations, it is possible to identify a communication for a specified service of any server made by any device on the network and to cause the DN to perform a process instead of the server. For example, if the DN receives a packet having a destination device address SIP of 10.1.1.1, a data service type SPORT of 2001, a destination server address DIP of 10.1.10.10, and a service type DPORT of 5001, it outputs "1" as a service ID. The service ID is an ID for identifying details of processing performed by the DN instead of the server. By referring to the service definition table (SVDT) to be discussed next, the DN determines details of the processing. Depending on the item, a wild card or regular expression may be used. For example, wild cards (*) are used as the DIP and DPORT. Accordingly, if the DN receives a packet having a SIP of 10.1.1.5 and a SPORT of 23, it outputs a service ID "6." Since searches are performed from the top of the table, items in a higher table entry row are selectively searched.

As seen, the distributed processing node is characterized in that it has the service table. Basically, the service table is pieces of information for, when receiving a packet, determining whether the packet should be processed by the distributed processing node. Holding such a table allows the distributed processing node to perform some of processes performed by the processing server instead of the server.

More specifically, the service table contains information on the source and destination of a packet received by the distributed processing node. Such information allows the above-mentioned determination to be made, allowing the load imposed on the center of the network to be reduced. It is most preferable to use the source IP address (SIP), the source port number (SPORT), the destination IP address (DIP), and the destination port number (DPORT) as information on the source and destination of the packet.

The service table also contains pieces of ID (service ID) information corresponding to the above-mentioned source information and destination information. By holding such IDs, it is possible to establish correspondences between the service table and a service definition table to be discussed later and to identify a process to be performed in accordance with a received packet.

### <Service Definition Table>

A service definition table (SVDT) is a table that defines details of processing with respect to a service ID that satisfies the conditions as a result of the search of the service table and is thus outputted. FIG. 8 shows an example configuration of the service definition table. The service definition table contains service IDs (SVID) 901; service modes (SVMODE) 902, service process IDs (SPID) 903, processing time constraint or priority (PRI) 904, output result destination IP addresses (ADIP) 905, and output result destination port numbers (ADPORT) 906. The table is referred to using an SVID as a key so as to obtain pieces of definition information. The SVMODE 902 represents the mode of a process performed by the distributed processing node instead of the server. Specifically, the SVMODE includes "Process," in which the received packet will be processed by the DN, "Pass," in which it will be transferred to a higher-level without processing it, and "Abandon," in which it will be abandoned. "Process" indicates that the target packet data will be processed by a processor of the DN instead of the server. However, it can be also considered to replace only the address of the received packet without processing it and then transmit the resulting packet again. In this case, by setting the SVMODE to "Pass," the DN can replace the header of the packet and then specify, as a packet destination server, a server which is previously statically determined from among multiple servers for performing the same process, for example, in order to disperse the load imposed on the server. A case is also considered where it is not desired to pass a specified packet or unspecified packet through a higher level in terms of security. In this case, by setting the SVMODE to "abandon, " it is possible to block communications of, for example, P2P traffic or the like at an end of the network on the basis of a setting made by the administrator. The service process IDSPID 903 is an ID for specifying a process (the substance of a program) performed by the DN. By referring to the service process management table using the SPID as a key, an execution processor core is determined. In an example of FIG. 8, an SPID corresponding to an SVID of "2" is "-." This indicates that the SVMODE 902 is "Pass" and that a corresponding service process ID is not defined. Similarly, when the SVMODE is "abandon," the SPID is not defined. The PRI 904 represents the response time or priority of the service. When multiple services are performed, they are performed in the descending order of priority. If the response time cannot be obeyed, the DN transmits the packet again without processing it instead of the server and without modifying the header thereof. The ADIP 905 is a destination address to which the DN transmits the result of processing performed instead of the server. The ADPORT 906 is a destination port number to which the DN transmits the result.

As seen, the distributed processing node is characterized in that it has the service definition table. The service definition table is basically pieces of information that define processes (service modes) to be performed by the distributed processing node. Holding such a table allows specification of details of a process to be performed by the distributed processing node instead of the server.

More specifically, the service definition table contains the correspondences between the above-mentioned service IDs and processes to be performed and defines a process to be performed for each service ID. Such a characteristic allows the distributed processing node to perform multiple processes instead of the server.

The service definition table also contains information indicating processing time constraints or priority. Thus, it is possible to operate the distributed processing node flexibly so that the distributed processing node transmits the packet again to the processing server when the distributed processing node cannot actually perform a process instead of the server.

The service definition table also contains information indicating the destination of the processed packet. Thus, the DN can completely process the packet without through the processing server, reducing the load imposed on the center of the network.

### <Service Process Management Table>

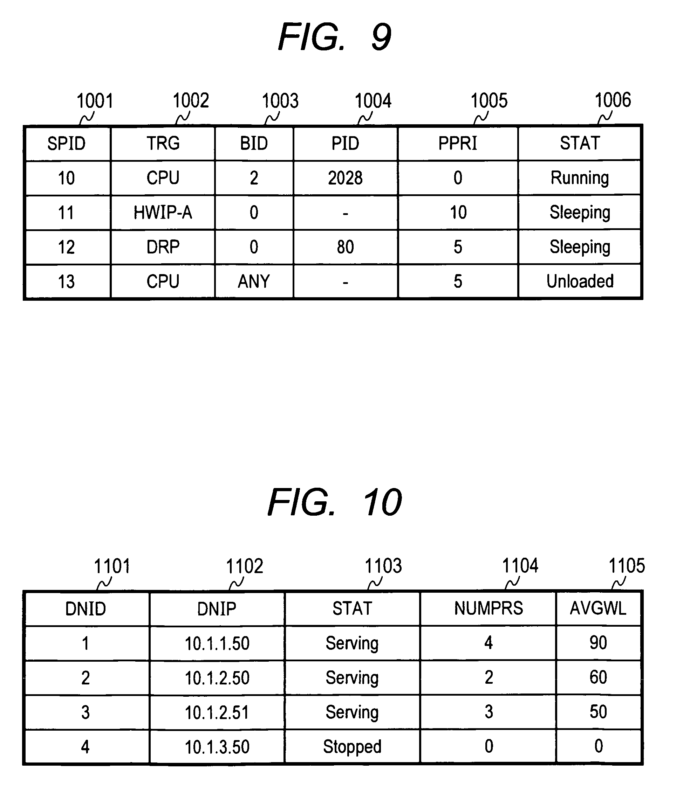

While the service definition table specifies details of a process performed instead of the server, the service process management table (SVPT) manages the types of execution processors, process IDs, and the like. FIG. 9 shows an example configuration of the service process table. The service process table contains service process IDs (SPID) 1001 for serving as a key when referring to the table, the types of execution processor cores (TRG) 1002, allocated processor core numbers (BID) 1003, process IDs on allocated processor cores (PID) 1004, process priority (PPRI) 1005, and process states (STAT) 1006. The TRG 1002 represents the type of a processor core that should perform a distributed program. If multiple cores can perform the program, multiple types may be specified. In a management process performed by a CPU of the DU, a processor core to be actually allocated is determined in consideration of the processing situation of each processor core and a time constraint condition PRI 904 corresponding to a service ID. The BID 1003 represents a processor core to be allocated. In an example of FIG. 9, a BID corresponding to an SPID of "13" is "ANY." This indicates that a processor core has yet to be determined. The PID 1004 is the process ID of a process to be performed by the core. When the type of the processor core is a dynamically reconfigurable processor (DRP), the PID 1004 represents a configuration surface number for setting a configuration. In the example of FIG. 9, a PID corresponding to an SPID of "11" is "-." This indicates that the execution processor core TRG 1002 is a "HWIP-A," which represents a dedicated circuit, and that there is no process ID concept. The PPPRI 1005 specifies the priority of a process performed by the processor core. This is also determined in the management process in accordance with the time constraint condition PRI 904 represented by the service ID. The STAT 1006 represents the state of the process. For example, "Running" indicates that the process is being performed, "Sleeping" that the process is on standby, and "Unloaded" that the main body of the program has yet to be loaded.

### <Distributed Node Management Table Held by Management Server>

Distributed processing nodes DN are collectively managed by a management server. Hereafter, a distributed node management table (DNMT) for managing DN will be described. FIG. 10 is an example of a distributed node management table held by a management server and showing the management states of DN. The distributed node management table contains distributed node IDs (DNID) 1101, DN IP addresses (DNIP) 1102, DN states DNSTAT 1103, under-execution service process numbers NUMPRS 1104, and processor load states AVGWL 1105. Accessing this table allows information on the DN to be obtained. The DN information can be used as a guideline when registering a new service. The DNID 1101 is an ID for uniquely identifying a node and is determined by the management server. The DNIP represents an IP address for accessing a DN. The DNSTAT 1103 represents an operating state. In an example of FIG. 10, "Serving" indicates that the DN is serving, and "Stopped" indicates that the DN is stopped. The NUMPRS 1104 represents the number of service processes which are currently being performed by the DN. The AVGWL 1105 represents the average load imposed on the processor cores of the DN.

### <Service Management Master Table Held by Management Server>

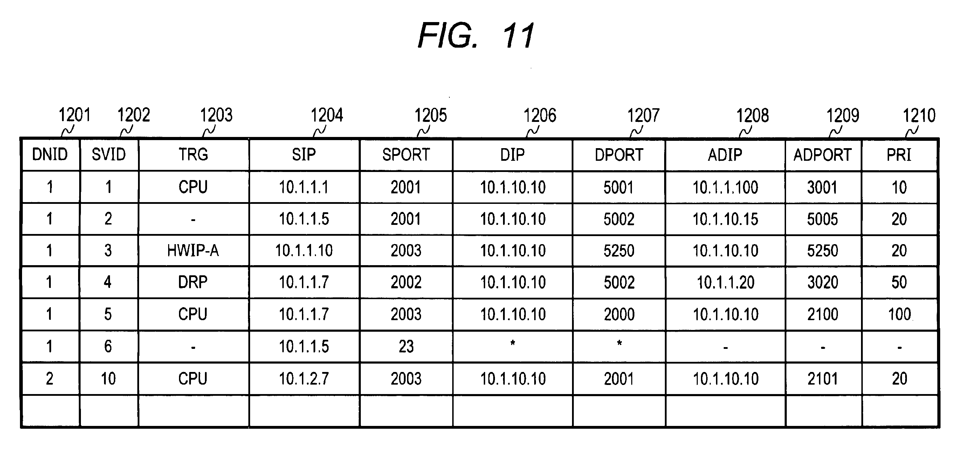

Information contained in the service table and the service definition table held by each distributed processing node is centrally managed by a service management master table (SVMT) held by the management server. When the user registers service information in this master table, the management server distributes the service information to the nodes. A node starts the service (instead of the server). FIG. 11 shows an example configuration of the service management master table. The service management master table contains distributed processing node IDs (DNID) 1201, service IDs (SVID) 1202, execution processor types (TRG) 1203, source ID addresses of packets performed instead of server (SIP) 1204, source port numbers (SPORT) 1205, destination IP addresses (DIP) 1206, destination port numbers (DPORT) 1207, processing result destination IP addresses (ADIP) 1208, destination port numbers (ADPORT) 1209, and service process response time constraints or priority (PRI) 1211. These items are the same as those described in the service table and the service definition table held by the DN.

### <Detailed Flow of Determination of Process Performed by Distributed Processing Node Instead of Server>

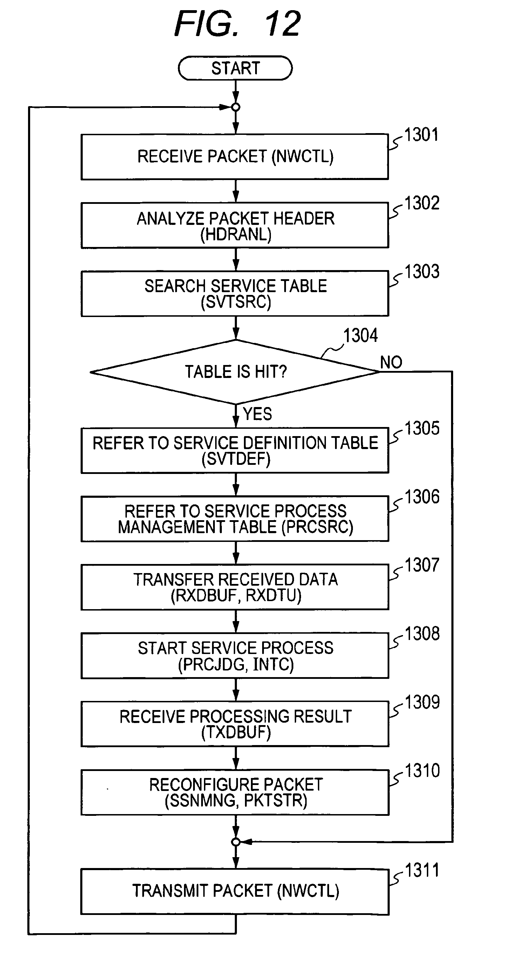

A method for performing a process using the distributed processing node DN instead of the server is provided using the hardware configuration and table information described above. FIG. 12 shows a detailed flow of a process that the DN to which the packet processing processor PKTPRC shown in FIG. 6 is applied performs instead of the server. The DN first receives a packet (1301). The DN then analyzes the header of the packet to extract the SIP, SPORT, DIP, and DPORT (1302). The DN then searches the service table for a service ID (SVID) for identifying a process which is to performed instead of the server and which corresponds to the SIP, SPORT, DIP, and DPORT serving as keys(1303). If no search key is hit (1304), this means that the target packet should not be performed by the DN instead of the server. The DN transmits the packet onto the network again without modifying the packet (1311). If a search key is hit, the DN refers to the service definition table defining details of processes performed instead of the server by using the SVID as a key so as to obtain a service process ID (SPID) (1305). The DN then refers to the service process management table to obtain an execution processor core (TRG) and a process ID (PID) on the basis of the SPID obtained (1306). Since the execution processor is determined, the DN transfers the packet data to a local memory or shared memory on the processor or an external memory (1307). The DN then starts the service process by issuing an interrupt to an execution processor core (1308). The DN transmits the processing result to a buffer for packet transmission (TXDBUF) (1308) and reconfigures the packet by replacing part of the header thereof with a destination address (ADIP) and a destination port (ADPORT) defined in the service definition table (1309). The DN eventually transmits the packet to the network (1310).

### <Flow of Distribution of Service Table Information and Program by Management Server>

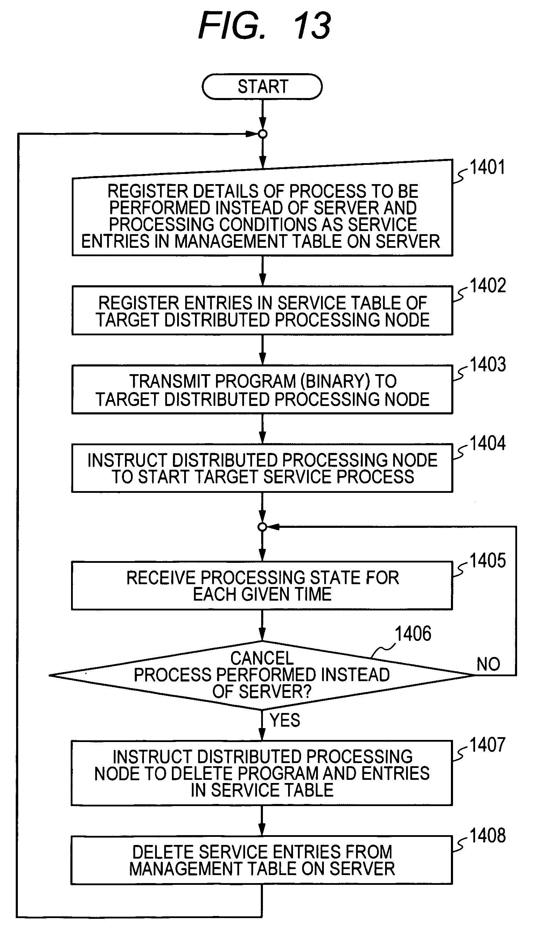

The service table for determining a process to be performed by the DN instead of the server is distributed by the management server. FIG. 13 shows a processing flow of distribution of service table information by the management server and distribution of a program object performed by the DN instead of the server. The user registers a process to be performed instead of the server, the ID of a DN to perform this process, and conditions for a packet to be subjected to the process in the service management master table on the management server (1401). At the same time as the registration, the management server registers entries in the service table of the target DN via the network in the management process (1402). The management server then transmits the main body of a program object to be executed, to the DN (1403). After registering the entries in the service table and transmitting the program, the management server instructs the DN to start a service process (1404). The DN starts the service process. If it detects a packet matching the entry conditions registered in the service table, the DN processes the packet instead of the server. In the management process, the management server receives the state of the node at every given time and registers the state in the distributed node management table (1405). To cancel the process performed instead of the server, the user instructs the DN to stop and delete the program under execution and delete the target entry in the service table (1407). The user then deletes the target entry from the service management master table on the server and completes the service (the process performed instead of the server).

### <Flow of Reception of Service Table Information and Program by Distributed Processing Node>

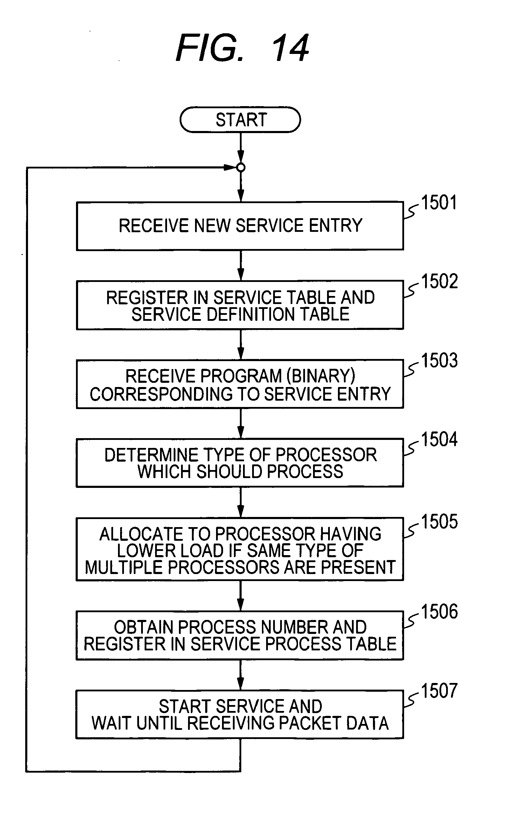

Hereafter, a flow of reception of service table information and program from the management server by the distributed processing node DN will be described. FIG. 14 shows a flow of reception of service table information and a program by the DN. A DN management process for managing the DN is running on the DN. This process is monitoring management and control communications transmitted from the management server. Upon receipt of an instruction to perform a new service from the management server, the DN management process receives new service table information (1501). The DN management process registers the information in the service table on the DN (1502). At the same time, the DN management process receives, from the management server, a program object to be performed by the DN instead of the server (1503). Subsequently, based on the information received, the DN management process determines a processor core which should perform this process (1504), checks the operating state of the current allocated processor by referring to the service process management table, and if there are multiple processor cores, allocates a process to a processor core on which a lower load is imposed (1505). After the allocation, the DN management process obtains a process ID on the processor core and updates the service process management table (1506). The DN is placed on standby until it receives a packet to be processed (1507). These are steps for receiving and registering a new service (a process performed instead of the server).

### List of Reference Signs

101 sever, 102 center of the network, 103, 111 router, 104, 115 wireless gateway, 105, 106, 116, 118 sensor, 107, 113, 117 control device, 108, 112 hub, 109 information processing terminal device, 110, 114 computer, 120, 121 local area network, 131 wired network, 132 wireless network, 141 to 143 distributed processing node, 301 to 303, 305 to 308, 310 process, 304, 309 bifurcation, 400 distributed processing node, 401, 402 physical laye chip, 403 memory, 404 processor, 405 non-volatile memory, 500 distributed processing node, 501, 502 physical layer chip, 503, 504 network controller, 505 memory, 506 processor, 507 packet processing processor, 508 associative memory, 509 memory, 510 non-volatile memory, 600 processor, 601, 602 general-purpose processor, 603 dynamic reconfigurable processor, 604 processing processor solely for hardware, 605 network controller, 606 packet processing processor, 607 interrupt controller, 608 shared memory, 609 data transfer controller, 610 memory controller, 611 on-chip shaped bus, 612 associative memory, 613 memory, 620 general-purpose processor core, 621 local memory, 622 control register, 623 data transfer unit, 624 ALU array, 625 hardware IP core, 630 physical layer chip, 631 external memory, 701 network controller, 702 header analysis block, 703 reception packet data buffer, 704 server table search block, 705 associative memory interface, 706 service definition table reference block, 707 memory interface, 708 process determination block, 709 process management table reference block, 710 memory interface, 711 reception packet data transfer unit, 712 transmittedr data buffer, 713 session management block, 714 packet reconfiguration block, 716 associative memory, 717 memory, 718 interrupt controller, 719 associative memory, 720 in-chip shared bus, 730 packet processing processor, 801 source IP address, 802 destination port number, 803 differencee IP address, 804 destination port number, 805, 901 service ID,902 operation mode, 903 service process ID, 904 priority, 905 result destination address, 906 result destination port, 1001 service process ID, 1002 target processor type, 1003 target processor core ID, 1004 process ID, 1005 process priority, 1006 service process state, 1101 distributed processing node ID, 1102 distributed processing node IP address, 1103 distributed processing node state, 1104 service process number, 1105 average processor load, 1201 distributed processing node ID, 1202 service ID, 1203 target processor type, 1204 source IP address, 1205 source port number, 1206 destination IP address, 1207 destination port number, 1208 result destination IP address, 1209 result destination port number, 1210 priority, 1301 to 1303, 1305 to 1311 process, 1304 bifurcation, 1401 input from user, 1402 to 1405, 1407, 1408 process, 1406 bifurcation, 1501 to 1507 process

## Claims

1. A method for processing information upon an information processing device, the information processing device being disposed between a terminal device and a processing server, the processing server being configured to process a plurality of packets transmitted by the terminal device, the information processing device being configured to intervene in transfer of the packets from the terminal device to the processing server, the method being **characterized in that** the method comprises:
a first step of receiving a first packet;
a second step of, after the first step, making a determination as to whether the information processing device should process the first packet, on the basis of header information of the first packet;
a third step of, if it is determined in the second step that the information processing device should process the first packet, performing a first process on a payload of the first packet; and
a fourth step of, if it is determined in the second step that the information processing device should not process the first packet, transmitting the first packet to the processing server.

2. The method for processing information according to claim 1, **characterized in that** the method further comprises:
a fifth step of, after the third step, determining whether the first packet should be abandoned, on the basis of data generated by performing the first process on the payload of the first packet; and
a sixth step of, if it is determined in the fifth step that the first packet should be abandoned, abandoning the first packet.

3. The method for processing information according to claim 1, **characterized in that** the first process is to abandon the first packet.

4. The method for processing information according to claim 2, **characterized in that** the method further comprises:
a seventh step of, if it is determined in the fifth step that the first packet should not be abandoned, generating a second packet for transmitting the data to a destination different from a destination of the first packet; and
an eighth step of transmitting the second packet to the destination different from the destination of the first packet.

5. The method for processing information according to claim 1, **characterized in that** in the second step, the determination is made by comparing first pieces of information indicating whether the information processing device should process the packets, with the header information of the first packet.

6. The method for processing information according to claim 5, **characterized in that** the first pieces of information include information indicating a source and destination of each of the packets.

7. The method for processing information according to claim 5, **characterized in that** in the third step, details of the first process are identified by referring to second pieces of information indicating correspondences between the first pieces of information and the details of the first process.

8. The method for processing information according to claim 2, **characterized in that** in the fifth step, whether the first packet should be abandoned is determined on the basis of the second pieces of information indicating the correspondences between the first pieces of information indicating whether the information processing device should process the packets and the details of the first process.

9. The method for processing information according to claim 4, **characterized in that** in the seventh step, a second process is performed on the basis of information indicating one of a processing time constraint on the first process and priority of the first process.

10. The method for processing information according to claim 1, **characterized in that** the first process is at least one of processes performed by the processing server.

11. An information processing device disposed between a terminal device and a processing server, the processing server being configured to process a plurality of packets transmitted by the terminal device, the information processing device being configured to intervene in transfer of the packets from the terminal device to the processing server, the information processing device being **characterized in that** the information processing device comprises:
a plurality of ports for transmitting or receiving the packets;
a first determination unit that, when one of the ports receives a first packet included in the packets, determines whether the information processing device should process the first packet, on the basis of a header of the first packet and, when determining that the information processing device should not process the first packet, transfers the first packet to the processing server; and
a first processing unit that, when the determination unit determines that the information processing device should process the first packet, performs a first process on a payload of the first packet.

12. The information processing device according to claim 11, **characterized in that** the information processing device further comprises a second determination unit that determines whether the first packet should be abandoned, on the basis of data generated by performing the first process on the payload of the first packet.

13. The information processing device according to claim 11, **characterized in that** the first process is to abandon the first packet.

14. The information processing device according to claim 12, **characterized in that** the information processing device further comprises a second processing unit that, when the second determination unit determines that the first packet should be abandoned, generates a second packet for transmitting the data to a destination different from a destination of the first packet.

15. The information processing device according to claim 11, **characterized in that** the information processing device further comprises:
a first storage unit that stores first pieces of information indicating whether the information processing device should process the packets; and
an analysis unit for analyzing the headers of the packets and that the first determination unit makes the determination by comparing the first pieces of information with the header of the first packet.

16. The information processing device according to claim 15, **characterized in that** the first pieces of information include information indicating a source and destination of each of the packets.

17. The information processing device according to claim 16, **characterized in that** the information processing device further comprises a second storage unit that stores second pieces of information indicating correspondences between the first pieces of information and details of the first process and that the first processing unit identifies the first process on the basis of the second pieces of information.

18. The information processing device according to claim 12, **characterized in that** the information processing device further comprises a second storage unit that stores second pieces of information indicating correspondences between the first pieces of information indicating whether the information processing device should process the packets and details of the first process and that the second determination unit determines whether the first packet should be abandoned, on the basis of the second pieces of information.

19. The information processing device according to claim 14, **characterized in that** the second processing unit performs the second process on the basis of information indicating one of a processing time constraint on the first process and priority of the first process.

20. The information processing device according to claim 11, **characterized in that** the first process is at least one of processes performed by the processing server.
